(19) Europäisches Patentamt
European Patent Office
Office européen des brevets

(11) **EP 2 348 767 A1**

(12) **EUROPEAN PATENT APPLICATION**
published in accordance with Art. 153(4) EPC

(43) Date of publication:
**27.07.2011 Bulletin 2011/30**

(51) Int Cl.:
***H04W 28/00*** (2009.01)

(21) Application number: **09820247.6**

(22) Date of filing: **13.10.2009**

(86) International application number:
**PCT/CN2009/074424**

(87) International publication number:
**WO 2010/043171 (22.04.2010 Gazette 2010/16)**

(84) Designated Contracting States:
**AT BE BG CH CY CZ DE DK EE ES FI FR GB GR HR HU IE IS IT LI LT LU LV MC MK MT NL NO PL PT RO SE SI SK SM TR**
Designated Extension States:
**AL BA RS**

(30) Priority: **16.10.2008  CN 200810216775**

(71) Applicant: **Huawei Technologies Co., Ltd.
Guangdong 518129 (CN)**

(72) Inventor: **ZHAO, Rongqian
Shenzhen
Guangdong 518129 (CN)**

(74) Representative: **Thun, Clemens
Mitscherlich & Partner
Patent- und Rechtsanwälte
Sonnenstrasse 33
80331 München (DE)**

(54) **METHOD AND APPARATUS FOR AGENT SHIFTS SCHEDULING**

(57) A method for agent shift scheduling is provided, which is applied in a call center. In the method, skill sets and management set of agents are obtained according to information of the agents in a call center. A traffic demand quantity is obtained according to historical traffic data, and the traffic demand quantity is transformed into a demand quantity of agents with a certain skill within a certain future time period T. A shift schedule and the quantity of required management sets in the shift within the certain time period T are obtained according to the demand quantity of agents, and the skill sets and the management sets of all the agents. Accordingly, an apparatus in which the method is applied is provided, so that agents on duty well match distribution of call requests or distribution of traffic demands at the moment, system resources are saved when the traffic demands are low, and system congestion caused by inadequate agents during heavy traffic is also avoided.

Obtain skill sets and management sets of agents according to information of the agents in a call center — 410

Obtain a traffic demand quantity according to historical traffic data, and transform the traffic demand quantity into an demand quantity of agents with a certain skill within a certain future time period T, where the demand quantity of agents is measured with a time interval t being used as a unit — 412

Obtain an agent work plan within the time period T according to the demand quantity of agents and the skill sets and the management sets of all the agents, and the agent work plan specifically includes a shift schedule and a quantity of required management sets in the shift — 414

FIG. 4

EP 2 348 767 A1

**Description**

The application claims priority to Chinese Patent Application No. 200810216775.7, filed on October 16, 2008, and entitled "METHOD AND APPARATUS FOR AGENT SHIFT SCHEDULING", which is incorporated herein by reference in its entirety.

**FIELD OF THE TECHNOLOGY**

The present invention relates to communication technologies, and more particularly to a method and an apparatus for agent shift scheduling.

**BACKGROUND OF THE INVENTION**

In a call center, shifts of many agents are required to be scheduled. During a shift, the agent receives incoming traffic. However, manual call requests or traffic always changes at different moments within a day and on different days within a month.

In the implementation of the present invention, the inventor finds that a call center needs a technology to automatically schedule shifts for agents, so that the agents on duty match distribution of call requests or distribution of traffic demands at the moment as much as possible. Therefore, system resources are saved when the traffic demands are low, or system congestion caused by inadequate agents during heavy traffic is avoided.

**SUMMARY OF THE INVENTION**

Embodiments of the present invention provide a method and an apparatus for agent shift scheduling, so that shifts are scheduled automatically, and at the same time traffic demands are fully satisfied.

A method for agent shift scheduling includes the following steps. Skill sets and management sets of agents are obtained according to information of the agents in a call center. A traffic demand quantity is obtained according to historical traffic data. The traffic demand quantity is transformed into a demand quantity of agents with a certain skill within a certain future time period. A shift schedule and the quantity of required management sets in the shift within the certain time period are obtained according to the demand quantity of agents, the skill sets, and the management sets.

Accordingly, an apparatus for agent shift scheduling is provided, in which the method for agent shift scheduling can be applied. The apparatus includes an agent demand unit, an agent grouping unit, and an agent shift scheduling unit. The agent demand unit is configured to obtain a traffic demand quantity according to historical traffic data, and transform the traffic demand quantity into a demand quantity of agents with a certain skill within a certain future time period T. The agent grouping unit is configured to obtain skill sets and management sets of agents according to information of the agents in a call center. The agent shift scheduling unit is configured to obtain a shift schedule and the quantity of required management sets in the shift within the certain time period T, according to the demand quantity of agents, the skill sets, and the management sets.

According to embodiments of the present invention, a demand quantity of seats or a demand quantity of agents is obtained according to historical traffic data, so that the agents on duty well match distribution of call requests or distribution of traffic demands at the moment. Therefore, system resources are saved when the traffic demands are low, and system congestion caused by inadequate agents during heavy traffic is also avoided. Furthermore, in the implementations, through double grouping of skills and management, practical requirements that agents in the same management set shall work uniformly and be managed uniformly are satisfied, and also operation and management of a call center becomes convenient.

**BRIEF DESCRIPTION OF THE DRAWINGS**

FIG. 1 is a schematic structural view of an apparatus for agent shift scheduling according to an embodiment of the present invention;

FIG. 2 is a schematic structural view of another apparatus for agent shift scheduling according to an embodiment of the present invention;

FIG. 3 is a schematic structural view of still another apparatus for agent shift scheduling according to an embodiment of the present invention;

FIG. 4 is a schematic flow chart of a method for agent shift scheduling according to an embodiment of the present invention;

FIG. 5 is a flow chart of a specific example of a method for agent shift scheduling according to an embodiment of the present invention;

FIG. 6 is a flow chart of a specific example of a method for agent shift scheduling according to an embodiment of the present invention; and

FIG. 7 is a schematic flow chart of a method for agent shift scheduling according to an embodiment of the present invention.

## DESCRIPTION OF THE EMBODIMENTS

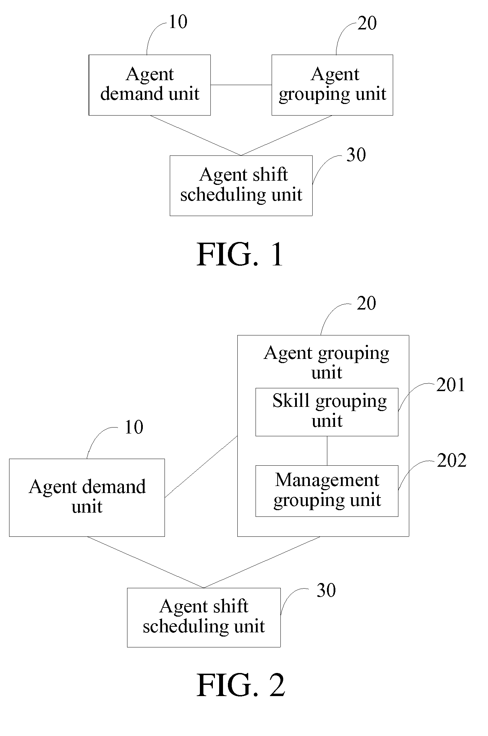

FIG. 1 is a schematic structural view of an apparatus for agent shift scheduling according to an embodiment of the present invention. The agent shift scheduling apparatus is applied in a call center, and includes an agent demand unit 10, an agent grouping unit 20, and an agent shift scheduling unit 30.

The agent demand unit 10 is configured to obtain a traffic demand quantity according to historical traffic data, and transform the traffic demand quantity into a demand quantity of agents with a certain skill within a certain future time period T. Specifically, the demand quantity may be measured with a time interval t being used as a unit.

The agent grouping unit 20 is configured to obtain skill sets and management sets of agents according to information of the agents in a call center.

The agent shift scheduling unit 30 is configured to obtain an agent work arrangement within the time period T according to the demand quantity of agents, and the skill sets and the management sets of all the agents. The agent work arrangement specifically includes a shift schedule and the quantity of required management sets in the shift.

It should be noted that, in embodiments of the present invention, T may be one day, one week, or one month; t may be a time period shorter than T. Usually the duration of T is an integral multiple of the duration of t. For example, t may be 15 minutes, 20 minutes, 30 minutes.

The skill refers to knowledge and capability of the agents in the call center to support a customer service system in the call center to answer questions, such as a GoTone service skill, an Easy own service skill, and an M-zone service skill. If an agent has several different skills, the agent can be referred to as a multi-skill agent.

The information of the agents in the call center refers to the quantity of the agents and the skills possessed by each agent.

A skill set refers to a set of agents with the identical skill. "The identical skill" refers to that no difference exists between skills possessed by the agents.

A management set may also be referred to as a work team, which refers to a set of a certain quantity of agents with the same work time and the same rest time. That is, all agents in a management set share the same shift.

A shift refers to a work time period of an agent, and is determined by information such as work start time, work end time, rest start time, and rest end time. Usually, the work time period is shorter than T, and includes an integral number of the duration of t. For example, a shift 9-16(11-12) represents that the work starts at 9 o'clock in the morning and ends at 4 o'clock in the afternoon, and the rest time is between 11 o'clock and 12 o'clock.

FIG. 2 is a schematic structural view of another apparatus for agent shift scheduling according to an embodiment of the present invention. The agent shift scheduling apparatus is applied in a call center and includes an agent demand unit 10, an agent grouping unit 20, and an agent shift scheduling unit 30. The functions of the units are the same as those of the units of the apparatus shown in FIG. 1. The agent grouping unit 20 includes a skill grouping unit 201 and a management grouping unit 202.

The skill grouping unit 201 is configured to put agents with the same skills into a skill set. For example, all agents from No. 1001 to 2000 in a call center possess or master the GoTone service skill and the Easy own service skill. Therefore, the agents form a skill set, which is marked as a skill set 1. Furthermore, all agents from No. 2001 to 3000 possess the Easy own service skill and the M-zone service skill. Therefore, the agents form another skill set, which is marked as a skill set 2.

The management grouping unit 202 is configured to form a management set through management grouping of the agents in the call center. In a specific practical application, different management sets may be formed in different manners. In the following, detailed description is given with reference to specific examples.

First Example

The management grouping unit 202 is configured to divide each skill set into multiple management sets, and the quantity of agents in each management set is equal.

Second Example

The management grouping unit 202 is configured to determine a quantity proportion of agents included in each skill set, where the quantity proportion of agents is referred to as an gent proportion in short, and divide all the agents in the call center into management sets, where in each management set, the quantity proportion of agents which belong to the each skill set respectively equals the agent proportion mentioned above.

Third Example

The management grouping unit 202 is configured to set each agent as a management set respectively. In other words, the agent shift scheduling is actually performed based on the individual agent.

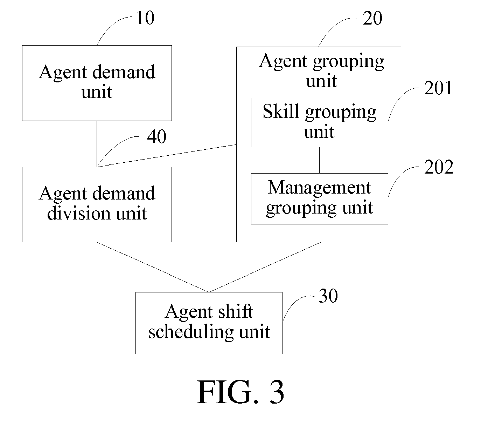

FIG. 3 is a schematic structural view of still another apparatus for agent shift scheduling according to an embodiment of the present invention. In the embodiment, the agent demand unit 10, the agent grouping unit 20, and the agent shift scheduling unit 30 in the embodiments shown in FIG. 1 or 2 are included. The agent demand unit 10 is configured to obtain a traffic demand quantity according to historical traffic data, and transform the traffic demand quantity into a demand quantity of agents with a certain skill within a certain future time period T. Specifically, the demand quantity may be measured with a time interval t being used as a unit. Specifically, the agent grouping unit 20 is as described in the first or third example, and is not repeatedly described here.

In this specific embodiment, the apparatus for agent shift scheduling further includes an agent demand division unit 40.

The agent demand division unit 40 is configured to obtain a sum of the demand quantities of agents of all skill sets within the time period T, where the quantities are measured with the time interval t being used as the unit, and the sum of the demand quantities is referred to as a total demand quantity in short, determine a quantity proportion of agents in each skill set, where the quantity proportion of agents is referred to as an agent proportion in short, and obtain the demand quantity of agents of each skill set within the time interval t respectively according to the total demand quantity and the agent proportion.

At the moment, the agent shift scheduling unit 30 is specifically configured to respectively obtain an agent work arrangement of each skill set within the time period T according to the demand quantity of agents of each skill set within the time interval t, the skill sets, and the management sets. The agent work arrangement specifically includes a shift schedule and the quantity of required management sets in the shift.

In view of the above, in each apparatus for agent shift scheduling in the embodiments of the present invention, the demand quantity of seats or the demand quantity of agents is obtained according to the historical traffic data, so that the agents on duty well match distribution of call requests or distribution of traffic demands at the moment. Therefore, system resources are saved when the traffic demands are low, and system congestion caused by inadequate agents during heavy traffic is also avoided. Furthermore, in some of the solutions, double grouping is performed according to skills and management, so that practical requirements that agents in the same management set shall work uniformly and be managed uniformly are met, so as to facilitate operation and management of call center.

The specific working steps of each of the apparatuses in FIGs.1, 2, and 3 are specifically described in the following with methods for agent shift scheduling.

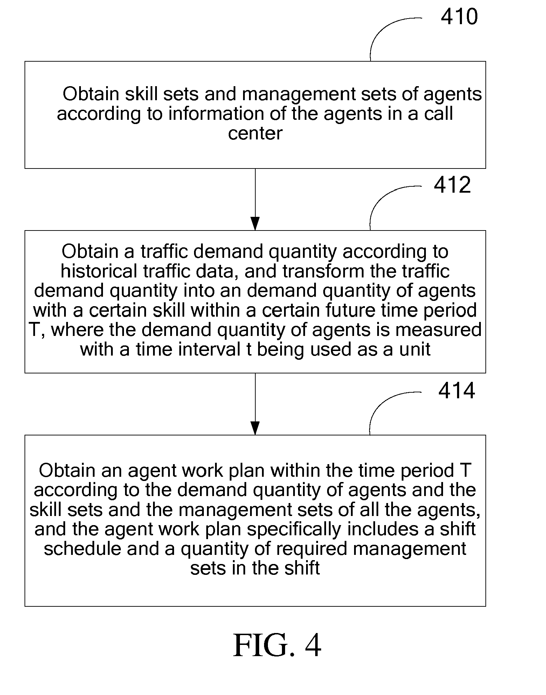

FIG. 4 is a schematic flow chart of a method for agent shift scheduling according to an embodiment of the present invention. The method includes the following steps.

In step 410, skill sets and management sets of agents are obtained according to information of the agents in a call center.

In different examples, step 410 may include different cases.

In a first example, step 410 specifically includes the following steps. In step 4101, the agents with the same skills are put into a skill set according to the information of the agents in the call center. In step 4102, the skill set is divided into multiple management sets, and each management set includes an equal agent quantity.

In a second example, step 410 specifically includes the following steps. In step 4103, the agents with the same skills are put into a skill set according to the information of the agents in the call center. In step 4104, a quantity proportion of agents in each skill set is determined, where the quantity proportion of agents is referred to as an agent proportion in short. In step 4105, all the agents in the call center are divided into management sets, so that in each management set, the quantity proportion of the agents which belong to the each skill set respectively equals the agent proportion mentioned above.

In a third example, step 410 specifically includes the following steps. In step 4106, the agents with the same skills are put into a skill set according to the information of the agents in the call center. In step 4107, each agent is respectively set as a management set.

In view of the above, steps 4101, 4103, and 4106 are the same. That is, the steps for setting the skill set are the same. But management sets in steps 4102, 4105, and 4107 may be set by using different methods according to practical situations, and detailed illustration is given in the following with reference to specific data and the accompanying drawings.

In step 412, a traffic demand quantity is obtained according to historical traffic data. The traffic demand quantity is transformed into a demand quantity of agents with a certain skill within a certain future time period T, where the demand quantity of agents is measured with a time interval t being used as a unit.

In a specific example, a demand quantity of agents can be obtained according to the following formula: a demand quantity of agents within a time period t = (a traffic demand quantity within the time period T * average duration of each call * an expected service level) / (the duration of the time period t * a personnel utilization ratio). The demand quantity of agents may also be obtained according to a traffic prediction model and an Erlang formula.

For example, the demand quantities of agents data b (t, s) in every fifteen minutes within the coming 31 days are calculated, where t represents a time period number (every 15 minutes is a time period, t = 1, 2, 3, ..., 96), and the s represents a skill number (s = 1, 2, 3, ..., S).

In step 414, an agent work arrangement within the time period T is obtained according to the demand quantity of agents, and the skill sets and the management sets of all the agents. The agent work arrangement specifically includes a shift schedule and the quantity of required management sets in the shift.

Specifically, a result may be obtained by establishing a mathematical model through software such as MATLAB and LINGO and by performing calculation. Examples will be given in the following for description.

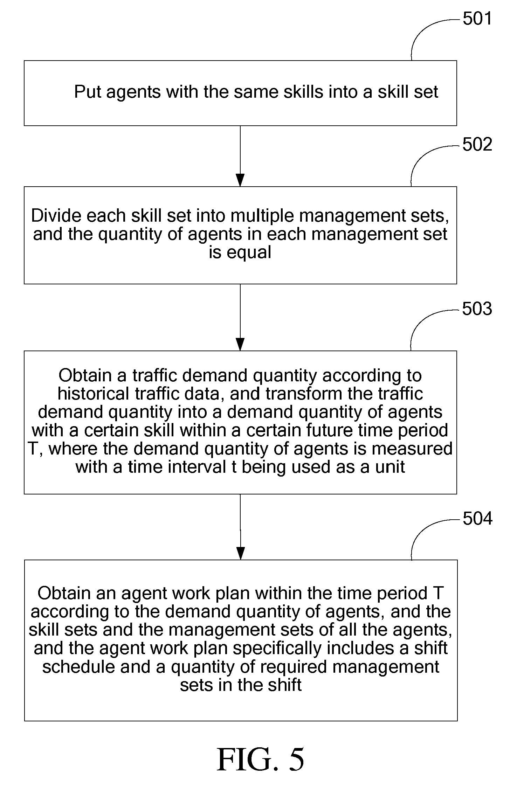

The technical solution according to the first example is described in the following with specific data examples. FIG. 5 is a flow chart of a specific example of a method for agent shift scheduling, which is consistent with the case in the first example of the method as shown in FIG. 4.

In step 501, agents with the same skills are put into a skill set according to the information of the agents in the call center.

Specifically, the call center includes three skills, which are the GoTone service skill, the Easy own service skill, and the M-zone service skill. The corresponding numbers are 1, 2, and 3. The information of the agents in the call center is as follows. Some agents, 60 in total, possess both the GoTone service skill and the Easy own service skill at the same time. Some agents, 104 in total, possess both the Easy own service skill and the M-zone service skill at the same time. The rest agents, 120 in total, possess the three skills at the same time.

Therefore, the skill set are divided into three skill sets, with the skill set numbers being 1, 2, and 3, respectively. Agents in the skill set 1 possess both the GoTone service skill and the Easy own service skill at the same time. Agents in the skill set 2 possess both the Easy own service skill and the M-zone service skill at the same time. Agents in the skill set 3 possess the GoTone service skill, the Easy own service skill, and the M-zone service skill at the same time.

In step 502, each skill set is divided into multiple management sets, and each management set includes an equal agent quantity.

Specifically, the division of the management sets is as follows.

In the skill set 1, each management set includes 5 persons, and 12 management sets and 60 persons in total are included. In the skill set 2, each management set includes 8 persons, and 13 management sets and 104 persons in total are included. In the skill set 3, each management set includes 15 persons, and 8 management sets and 120 persons in total are included.

In step 503, a traffic demand quantity is obtained according to historical traffic data. The traffic demand quantity is transformed into a demand quantity of agents with a certain skill within a certain future time period T, where the demand quantity of agents is measured with a time interval t being used as a unit.

Specifically, the demand quantity of agents data b (t, s) for each hour within one coming day may be calculated by using a traffic prediction model and an Erlang formula, where t represents a time period number (each hour is a time period, t = 1, 2, 3, ..., or 24), and s represents a skill number (s = 1, 2, or 3). Table 1 shows the demand quantity of agents within the day divided into 24 hours.

**Table 1**

| Time Period | GoTone | Easy Own | M-zone |
|---|---|---|---|
| 0-1 | 5 | 15 | 13 |
| 1-2 | 5 | 15 | 13 |
| 2-3 | 8 | 15 | 10 |
| 3-4 | 8 | 15 | 10 |
| 4-5 | 8 | 15 | 10 |

(continued)

| Time Period | GoTone | Easy Own | M-zone |
|---|---|---|---|
| 5-6 | 8 | 15 | 10 |
| 6-7 | 20 | 57 | 64 |
| 7-8 | 20 | 57 | 64 |
| 8-9 | 16 | 39 | 53 |
| 9-10 | 16 | 39 | 53 |
| 10-11 | 16 | 39 | 53 |
| 11-12 | 16 | 39 | 53 |
| 12-13 | 30 | 80 | 95 |
| 13-14 | 30 | 80 | 95 |
| 14-15 | 17 | 38 | 42 |
| 15-16 | 17 | 38 | 42 |
| 16-17 | 17 | 38 | 42 |
| 17-18 | 17 | 38 | 42 |
| 18-19 | 22 | 61 | 60 |
| 19-20 | 22 | 61 | 60 |
| 20-21 | 11 | 20 | 15 |
| 21-22 | 11 | 20 | 15 |
| 22-23 | 11 | 20 | 15 |
| 23-0 | 11 | 20 | 15 |

In step 504, an agent work arrangement within the time period T is obtained according to the demand quantity of agents, and the skill sets and the management sets of all the agents. The agent work arrangement specifically includes a shift schedule and the quantity of required management sets in the shift.

Specifically, a result may be resolved by establishing a mathematical model through software such as MATLAB and LINGO. For example, step 504 is implemented by using the following mathematical model, where $T_i = (t_1^i, t_2^i, t_3^i, ...)$ represents the set of the covered time periods in the shift $i$; $S_j = (s_1^j, s_2^j, ...)$ represents the set of the skills included in the skill set $j$; $x_{ij}$ represents the quantity of agents required by the skill set $j$ in the shift $i$ (a non-negative integer variable); $y_{ts}^{(i,j)}$ represents the quantity of agents serving with the skill $s$ of the skill set $j$ in the shift $i$ during time period $t \in T_i$ (a non-negative integer variable), and $I \otimes J(t,s) = \{(i,j) | t \in T_i \wedge s \in S_j\}$. The established mathematical model is as follows.

Optimization objective:

Minimum human power: $\min \sum_{(i,j)} c_{ij} x_{ij}$ (1), where the human power can be regarded as the agents, and $c_{ij}$ may be a payment for using the human power.

The human power arranged for each (time period or skill) can meet the demand

$$\sum_{(i,j) \in I \otimes J(t,s)} y_{ts}^{(i,j)} \geq b_{ts}, \forall t, s$$ (2), where $b_{ts}$ may be an expected human powr demand for each time period within a certain future time period.

The sum of the human power serving with different skills in the skill set in a shift is limited, as

$$\sum_{s \in S_j} y_{ts}^{(i,j)} \le x_{ij}, \forall t \in T_i, \forall i, j \qquad (3).$$

In a specific working scenario, some limits may further be added according to practical requirements, as are illustrated in the following examples.

The persons arranged in each skill set in one day does not exceed the human resource limit

$$\sum_i x_{ij} \le r_j, \forall j \qquad (5),$$ where $r_j$ may be the human resource limit of each skill set.

Alternatively, total human power arranged in one day is equal to the human resource limit $$\sum_j \sum_i x_{ij} = R \qquad (6),$$

where $R$ may be the total human resource limit value of each skill set.

Alternatively, the lower limit of the average labor-hour per day of each skill set is

$$\sum_i (length(x_{ij}) - avgtime\_\min) \ge 0, \forall j \qquad (7).$$

Alternatively, the upper limit of the average labor-hour per day of each skill set is

$$\sum_i (length(x_{ij}) - avgtime\_\max) \le 0, \forall j \qquad (8).$$

Alternatively, the total human power arranged in each time period is less than the total seat limit

$$\sum_s \sum_{(i,j) \in I \otimes J(t,s)} y_{ts}^{(i,j)} \le SL_t, \forall t \qquad (9),$$ where $SL_t$ is the total seat limit of the time period t.

Alternatively, it is limited that the average labor-hour of one shift is equal to the average labor-hour of another shift.

Table 2 indicates that a feasible result may be obtained in steps 501 to 504 in the in the embodiment.

**Table 2**

| | GoTone and Easy own group (person) | Easy own and M-zone Group (quantity of person) | Set of All-around Skills (person) |
|---|---|---|---|
| Shifts 0-8 | 10 | 8 | 15 |
| Shifts 6-14 | 15 | 48 | 45 |
| Shifts 12-20 | 35 | 32 | 30 |
| Shifts 18-0 | 0 | 16 | 30 |

It is obvious that the quantity of required agents in each skill combination can be easily transformed into the quantity of management sets. The quantity of the management sets equals the value obtained by dividing the quantity of required agents in each skill combination by the quantity of agents included in each management set.

In view of the above, in the implementation of steps 501 to 504, the skill set and the management set are divided, the traffic demand is transformed into agent demand, and the reasonable shifts and quantity of the management sets are obtained according to the agent demand and the division of skill sets and the management sets, and thus on the one hand the resource in the call center is neither wasted nor inadequate, and on the other hand the uniform management of the agents is facilitated.

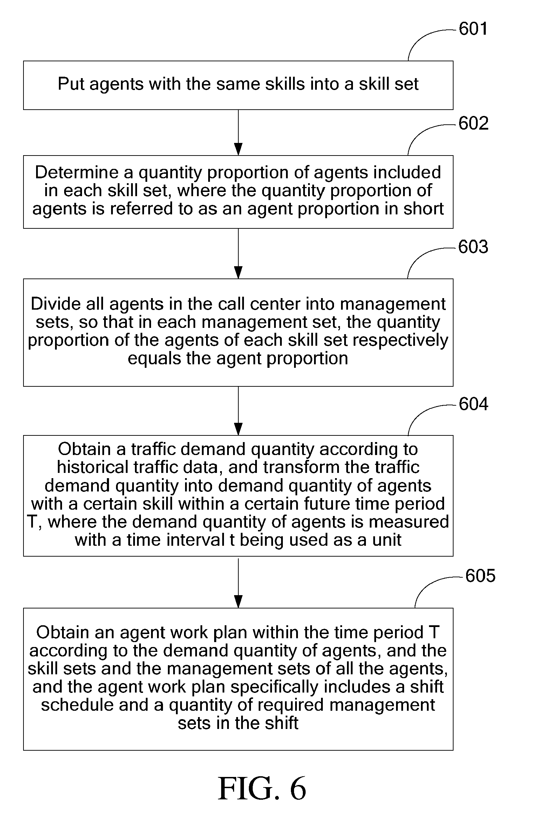

FIG. 6 is a flow chart of a specific example of a method for agent shift scheduling, which is consistent with the case in the second example of the method as shown in FIG. 4.

In step 601, agents with the same skills are put into a skill set according to information of the agents in a call center.

Specifically, a skill set 1 has both the GoTone service skill and the Easy own service skill at the same time and includes 100 persons. A skill set 2 has both the Easy own service skill and the M-zone service skill at the same time and includes 200 persons. A skill set 3 has the GoTone service skill, the Easy own service skill, and the M-zone service skill at the same time and includes 300 persons.

In step 602, a quantity proportion of agents included in each skill set is determined, where the quantity proportion of agents is referred to as an agent proportion in short.

Specifically, the agent proportion is 100: 200: 300, that is, 1:2:3.

In step 603, all the agents in the call center are divided into management sets, so that in each management set, the quantity proportion of the agents which belong to the each skill set respectively equals the agent proportion.

Specifically, the management set is divided as follows. According to the agent proportion, that is, 1:2:3, each management set includes 2 agents in the skill set 1, 4 agents in the skill set 2, and 6 agents in the skill set 3, and 50 management sets in total are included. In such division of management sets, each management set can serve with all skills.

In step 604, a traffic demand quantity is obtained according to historical traffic data. The traffic demand quantity is transformed into a demand quantity of agents with a certain skill within a certain future time period T, where the demand quantity of agents is measured with a time interval t being used as a unit.

In this embodiment, the total demand of agents within the time period T may further be calculated according the demand quantities $b_{t1}$, $b_{t2}$, and $b_{t3}$ of agents with different skills (such as the GoTone service skill, the Easy own service skill, and the M-zone service skill) within the time period T, as $b_t = b_{t1} + b_{t2} + b_{t3}$.

Specifically, in a specific example, the demand quantity of agents can be obtained by using the following formula: the demand quantity of agents within a time period t = (a traffic demand quantity within the time period T * average duration of each call * an expected service level) / (the duration of the time period t * a personnel utilization ratio). Furthermore, the demand quantity of agents may also be obtained by using a traffic prediction model and an Erlang formula.

For example, the demand quantity of agents $b_{t1}$, $b_{t2}$, and $b_{t3}$ of the GoTone service, the Easy own service, and the M-zone service in every hour of one coming day (24 hours) are obtained. Table 3 is an example of the demand quantity of agents.

**Table 3**

| Time Period | GoTone | Easy Own | M-zone |
|---|---|---|---|
| 0-1 | 27 | 60 | 33 |
| 1-2 | 28 | 62 | 30 |
| 2-3 | 30 | 60 | 30 |
| 3-4 | 30 | 55 | 35 |
| 4-5 | 30 | 60 | 60 |
| 5-6 | 64 | 57 | 59 |
| 6-7 | 60 | 120 | 60 |
| 7-8 | 60 | 123 | 87 |
| 8-9 | 151 | 214 | 85 |
| 9-10 | 150 | 210 | 90 |
| 10-11 | 140 | 210 | 100 |
| 11-12 | 153 | 207 | 90 |
| 12-13 | 180 | 210 | 120 |
| 13-14 | 174 | 213 | 123 |
| 14-15 | 180 | 210 | 120 |
| 15-16 | 185 | 170 | 125 |
| 16-17 | 180 | 180 | 150 |
| 17-18 | 112 | 180 | 98 |

(continued)

| Time Period | GoTone | Easy Own | M-zone |
|---|---|---|---|
| 18-19 | 120 | 180 | 90 |
| 19-20 | 114 | 182 | 94 |
| 20-21 | 120 | 90 | 90 |
| 21-22 | 53 | 93 | 64 |
| 22-23 | 60 | 85 | 65 |
| 23-0 | 54 | 93 | 63 |

Table 4 indicates the total demand of agents in each time period calculated according to the data in Table 3.

**Table 4**

| Time Period | Total Demand |
|---|---|
| 0-1 | 120 |
| 1-2 | 120 |
| 2-3 | 120 |
| 3-4 | 120 |
| 4-5 | 150 |
| 5-6 | 180 |
| 6-7 | 240 |
| 7-8 | 270 |
| 8-9 | 450 |
| 9-10 | 450 |
| 10-11 | 450 |
| 11-12 | 450 |
| 12-13 | 510 |
| 13-14 | 510 |
| 14-15 | 510 |
| 15-16 | 480 |
| 16-17 | 510 |
| 17-18 | 390 |
| 18-19 | 390 |
| 19-20 | 390 |
| 20-21 | 300 |
| 21-22 | 210 |
| 22-23 | 210 |
| 23-0 | 210 |

In step 605, an agent work arrangement within the time period T is obtained according to the demand quantity of agents, and the skill sets and the management sets of all the agents. The agent work arrangement specifically includes a shift schedule and the quantity of required management sets in the shift.

Specifically, in this embodiment, agent shift scheduling of shifts of 50 management sets that meets the traffic demand $b_t$ is calculated. The agents with different skills in each management set are standard ones, and each management set can serve with all the skills, which can be regarded as the agent shift scheduling of shifts of a single skill. Specific calculation may be performed with reference to the formulas in step 504, and the difference is that the s and the j are 0. The calculation is not discussed herein.

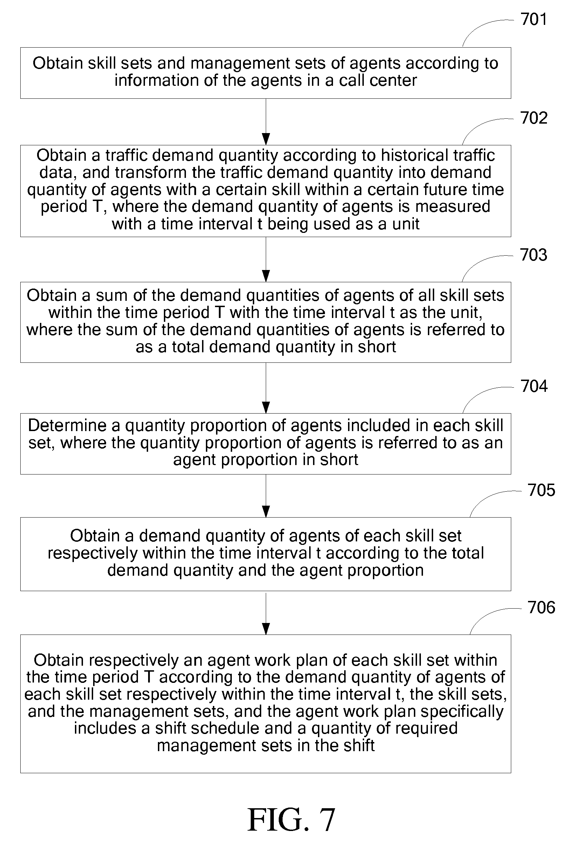

FIG. 7 is a schematic flow chart of a method for agent shift scheduling according to an embodiment of the present invention. The method includes the following steps.

In step 701, skill sets and management sets of agents are obtained according to information of the agents in a call center. Specifically, in the method, the specific division is performed by using the method in the first example, that is, the method in steps 501 to 502.

For example, the division result of the skill set and the management set are as follows. A skill set 1 has both the GoTone service skill and the Easy own service skill at the same time, and includes 20 management sets, and 100 persons in total. A skill set 2 has both the Easy own service skill and the M-zone service skill at the same time, and includes 20 management sets and 200 persons in total. A skill set 3 has the GoTone service skill, the Easy own service skill, and the M-zone service skill at the same time, and includes 20 management sets and 300 persons in total.

In step 702, a traffic demand quantity is obtained according to historical traffic data. The traffic demand quantity is transformed into a demand quantity of agents with a certain skill within a certain future time period T, where the demand quantity of agents is measured with a time interval t being used as a unit. It should be noted that no time sequence exists between steps 701 and 702.

In step 703, a sum of the demand quantities of agents of all skill sets within the time period T is obtained, where the demand quantities of agents is measured with the time interval t being used as the unit, and the sum of the demand quantities of agents is referred to as a total demand quantity in short.

For example, the demand quantity of agents possessing the GoTone service skill, the Easy own service skill, and the M-zone service skill within one coming day with an hour as the unit is $b_{t1}$, $b_{t2}$, and $b_{t3}$, respectively; so within the time unit, the total demand quantity of the GoTone service skill, the Easy own service skill, and the M-zone service skill is $b_t = b_{t1} + b_{t2} + b_{t3}$. Table 5 indicates a specific example of the demand quantity of agents possessing each skill and the total demand quantity.

**Table 5**

| Time Period | GoTone | Easy Own | M-zone | Total Demand |
|---|---|---|---|---|
| 0-1 | 27 | 60 | 33 | 120 |
| 1-2 | 28 | 62 | 30 | 120 |
| 2-3 | 30 | 60 | 30 | 120 |
| 3-4 | 30 | 55 | 35 | 120 |
| 4-5 | 30 | 60 | 60 | 150 |
| 5-6 | 64 | 57 | 59 | 180 |
| 6-7 | 60 | 120 | 60 | 240 |
| 7-8 | 60 | 123 | 87 | 270 |
| 8-9 | 151 | 214 | 85 | 450 |
| 9-10 | 150 | 210 | 90 | 450 |
| 10-11 | 140 | 210 | 100 | 450 |
| 11-12 | 153 | 207 | 90 | 450 |
| 12-13 | 180 | 210 | 120 | 510 |
| 13-14 | 174 | 213 | 123 | 510 |
| 14-15 | 180 | 210 | 120 | 510 |
| 15-16 | 185 | 170 | 125 | 480 |
| 16-17 | 180 | 180 | 150 | 510 |
| 17-18 | 112 | 180 | 98 | 390 |
| 18-19 | 120 | 180 | 90 | 390 |
| 19-20 | 114 | 182 | 94 | 390 |

(continued)

| Time Period | GoTone | Easy Own | M-zone | Total Demand |
|---|---|---|---|---|
| 20-21 | 120 | 90 | 90 | 300 |
| 21-22 | 53 | 93 | 64 | 210 |
| 22-23 | 60 | 85 | 65 | 210 |
| 23-0 | 54 | 93 | 63 | 210 |

In step 704, a quantity proportion of agents included in each skill set is determined, where the quantity proportion of agents is referred to as an agent proportion in short.

Specifically, in the example, the agent proportion is 1:2:3.

In step 705, a demand quantity of agents possessing each skill set within the time interval t is obtained respectively according to the total demand quantity and the agent proportion.

Specifically, the total demand quantity is divided into each skill set according to the agent proportion. The demand quantity of agents that the skill set 1 is required to bear within the time period t is $b1_t = (b_{t1} + b_{t2} + b_{t3}) *100/ (100 + 200 + 300)$. The demand quantity of agents that the skill set 2 is required to bear within the time period t is $b2_t = (b_{t1} + b_{t2} + b_{t3}) * 200 /(100 + 200 + 300)$. The demand quantity of agents that the skill set 3 is required to bear within the time period t is $b2_t = (b_{t1} + b_{t2} + b_{t3}) * 300 /(100 + 200 + 300)$.

Table 6 shows the division result of the demand quantity of agents of the skill set according to the situation as shown in Table 5.

**Table 6**

| Time Period | Skill Set 1 | Skill Set 2 | Skill Set 3 |
|---|---|---|---|
| 0-1 | 20 | 40 | 60 |
| 1-2 | 20 | 40 | 60 |
| 2-3 | 20 | 40 | 60 |
| 3-4 | 20 | 40 | 60 |
| 4-5 | 25 | 50 | 75 |
| 5-6 | 30 | 60 | 90 |
| 6-7 | 40 | 80 | 120 |
| 7-8 | 45 | 90 | 135 |
| 8-9 | 75 | 150 | 225 |
| 9-10 | 75 | 150 | 225 |
| 10-11 | 75 | 150 | 225 |
| 11-12 | 75 | 150 | 225 |
| 12-13 | 85 | 170 | 255 |
| 13-14 | 85 | 170 | 255 |
| 14-15 | 85 | 170 | 255 |
| 15-16 | 80 | 160 | 240 |
| 16-17 | 85 | 170 | 255 |
| 17-18 | 65 | 130 | 195 |
| 18-19 | 65 | 130 | 195 |
| 19-20 | 65 | 130 | 195 |
| 20-21 | 50 | 100 | 150 |
| 21-22 | 35 | 70 | 105 |

(continued)

| Time Period | Skill Set 1 | Skill Set 2 | Skill Set 3 |
|---|---|---|---|
| 22-23 | 35 | 70 | 105 |
| 23-0 | 35 | 70 | 105 |

In step 706, an agent work arrangement of each skill set within the time period T is obtained respectively according to the demand quantity of agents of each skill set within the time interval t, the skill sets, and the management sets. The agent work arrangement specifically includes a shift schedule and the quantity of required management sets in the shift.

Specifically, shifts and the quantity of required management sets of the skill set 1 for the demand quantity of agents $b1_t$, shifts and the quantity of required management sets of the skill set 2 for the demand quantity of agents $b2_t$, and shifts and the quantity of required management sets of the skill set 3 for the demand quantity of agents $b3_t$ can be obtained respectively.

Specifically, for different skill sets, the formula in step 504 is used respectively for calculation, and the difference is that the s and the j are 0, respectively. The calculation is not discussed herein.

In view of the above, in each apparatus for agent shift scheduling in the embodiments of the present invention, the demand quantity of seats or the demand quantity of agents is obtained according to the historical traffic data, so that the agents on duty well match distribution of call requests or distribution of traffic demands at the moment. Therefore, system resources are saved when the traffic demands are low, and system congestion caused by inadequate agents during heavy traffic is also avoided. Furthermore, in some of the solutions, double grouping is performed according to skills and management, so that practical requirements that agents in the same management set shall work uniformly and be managed uniformly are met, so as to facilitate operation and management of the call center.

The apparatus embodiments are merely exemplary. Units described as separate components may be or may not be physically separated. Components shown as units may be or may not be physical units, that is, may be integrated or distributed to a plurality of network units. Some or all of the modules may be selected to achieve the objective of the solution of the embodiment according to practical demands. Persons of ordinary skill in the art can understand and implement the present invention without creative efforts.

Persons of ordinary skill in the art should understand that all or a part of the steps of the method according to the embodiments of the present invention may be implemented by a program instructing relevant hardware. The program may be stored in a computer readable storage medium. When the program is run, the steps of the method according to the embodiments of the present invention are performed. The storage medium may be such as a magnetic disk, an optical disk, a Read-Only Memory (ROM), or a Random Access Memory (RAM).

**Claims**

1. A method for agent shift scheduling, comprising:

    obtaining skill sets and management sets of agents according to information of the agents in a call center;
    obtaining a traffic demand quantity according to historical traffic data, and transforming the traffic demand quantity into a demand quantity of agents with a certain skill within a certain future time period; and
    obtaining a shift schedule and the quantity of the required management sets in the shift within the time period according to the demand quantity of agents, the skill sets, and the management sets.

2. The method according to claim 1, wherein
the obtaining the skill sets and the management sets of the agents according to the skills of the agents in the call center specifically comprises:

    putting the agents with the same skills into a skill set; and
    dividing the skill set into multiple management sets, wherein the quantity of agents in each management set is equal.

3. The method according to claim 1, wherein
the obtaining the skill sets and the management sets of the agents according to the skills of the agents in the call center specifically comprises:

putting the agents with the same skills into a skill set; and

determining a quantity proportion of the agents in each skill set, wherein the quantity proportion of the agents is referred to as an agent proportion in short; and

dividing all the agents in the call center into management sets, wherein in each management set, the quantity proportion of the agents which belong to the each skill set respectively equals the agent proportion.

4. The method according to claim 1, wherein
the obtaining the skill sets and the management sets of the agents according to the skills of the agents in the call center specifically comprises:

putting the agents with the same skills into a skill set; and

setting each agent as a management set respectively.

5. The method according to claim 2 or 4, wherein
after the obtaining the future traffic demand quantity and the obtaining the skill sets and the management sets of the agents, the method further comprises:

obtaining a sum of the demand quantities of agents of all skill sets within the time period, where the demand quantity of agents is measured with a time interval t being used as a unit, and the sum of the demand quantities of agents is referred to as a total demand quantity in short;

determining a quantity proportion of the agents in each skill set, wherein the quantity proportion of the agents is referred to as an agent proportion in short;

obtaining a demand quantity of agents of the each skill set within the time interval t respectively according to the total demand quantity and the agent proportion; and

the obtaining the agent shift schedule within the time period specifically comprises:

obtaining respectively an agent work arrangement of each skill set within the time period T according to the demand quantity of agents of the each skill set within the time interval t, the skill sets, and the management sets, wherein the agent work arrangement specifically comprises a shift schedule and the quantity of required management sets in the shift.

6. An apparatus for agent shift scheduling, comprising:

an agent demand unit, configured to obtain a traffic demand quantity according to historical traffic data, and transform the traffic demand quantity into a demand quantity of agents with a certain skill within a certain future time period;

an agent grouping unit, configured to obtain skill sets and management sets of agents according to information of the agents in a call center; and

an agent shift scheduling unit, configured to obtain a shift schedule and the quantity of required management sets in the shift within the certain time period according to the demand quantity of agents, the skill sets, and the management sets.

7. The apparatus according to claim 6, wherein
the agent grouping unit comprises a skill grouping unit and a management grouping unit,
the skill grouping unit is configured to put agents with the same skills into a skill set; and
the management grouping unit is configured to divide the skill set into multiple management sets, wherein each management set comprises an equal agent quantity.

8. The apparatus according to claim 6, wherein
the agent grouping unit comprises a skill grouping unit and a management grouping unit,
the skill grouping unit is configured to put agents with the same skills into a skill set; and
the management grouping unit is configured to determine a quantity proportion of the agents in each skill set, where the quantity proportion of the agents is referred to as an agent proportion in short, and divide all the agents in the call center into management sets, so that in each management set, the quantity proportion of the agents which belong to the each skill set respectively equals the agent proportion.

9. The apparatus according to claim 6, wherein the agent grouping unit comprises a skill grouping unit and a management grouping unit,

the skill grouping unit is configured to put agents with the same skills into a skill set; and

the management grouping unit is configured to set each agent as a management set respectively.

**10.** The apparatus according to claim 7 or 9, comprising:

an agent demand division unit, configured to obtain a sum of the demand quantities of agents of all skill sets within the time period, wherein the demand quantity of agents is measured with a time interval t being used as a unit, and the sum of the demand quantities is referred to as a total demand quantity in short, determine a quantity proportion of the agents comprised in each skill set, wherein the quantity proportion of the agents is referred to as an agent proportion in short, and obtain a demand quantity of agents of the each skill set respectively within the time interval t according to the total demand quantity and the agent proportion;

wherein the agent shift scheduling unit is specifically configured to respectively obtain an agent work arrangement of the each skill set within the time period according to the demand quantity of agents of the each skill set within the time interval t, the skill sets, and the management sets, and the agent work arrangement specifically comprises a shift schedule and the quantity of required management sets in the shift.

10

20

Agent
demand unit

Agent
grouping unit

30

Agent shift
scheduling unit

# FIG. 1

20

Agent grouping
unit

201

Skill grouping
unit

10

202

Agent demand
unit

Management
grouping unit

30

Agent shift
scheduling unit

# FIG. 2

10

Agent demand unit

20

Agent grouping unit

Skill grouping unit — 201

40

Management grouping unit — 202

Agent demand division unit

Agent shift scheduling unit — 30

# FIG. 3

```
                                                    ⌐ 410
┌──────────────────────────────────────────────────┐
│                                                    │
│    Obtain skill sets and management sets of agents │
│       according to information of the agents in a call │
│                        center                      │
│                                                    │
└──────────────────────────────────────────────────┘
                          │
                          ▼              ⌐ 412
┌──────────────────────────────────────────────────┐
│        Obtain a traffic demand quantity according to │
│         historical traffic data, and transform the traffic │
│       demand quantity into an demand quantity of agents │
│       with a certain skill within a certain future time period │
│     T, where the demand quantity of agents is measured │
│            with a time interval t being used as a unit │
└──────────────────────────────────────────────────┘
                          │
                          ▼              ⌐ 414
┌──────────────────────────────────────────────────┐
│       Obtain an agent work plan within the time period T │
│        according to the demand quantity of agents and the │
│       skill sets and the management sets of all the agents, │
│        and the agent work plan specifically includes a shift │
│         schedule and a quantity of required management │
│                     sets in the shift │
└──────────────────────────────────────────────────┘
```

FIG. 4

```
                                                          ┌─ 501
    ┌────────────────────────────────────────────┐
    │                                            │
    │   Put agents with the same skills into a skill set   │
    │                                            │
    └────────────────────────────────────────────┘
                          │
                          ▼                       ┌─ 502
    ┌────────────────────────────────────────────┐
    │   Divide each skill set into multiple management sets,  │
    │   and the quantity of agents in each management set  │
    │                    is equal                │
    └────────────────────────────────────────────┘
                          │
                          ▼                       ┌─ 503
    ┌────────────────────────────────────────────┐
    │       Obtain a traffic demand quantity according to   │
    │         historical traffic data, and transform the traffic  │
    │       demand quantity into a demand quantity of agents  │
    │    with a certain skill within a certain future time period  │
    │    T, where the demand quantity of agents is measured  │
    │          with a time interval t being used as a unit   │
    └────────────────────────────────────────────┘
                          │
                          ▼                       ┌─ 504
    ┌────────────────────────────────────────────┐
    │      Obtain an agent work plan within the time period T  │
    │    according to the demand quantity of agents, and the  │
    │    skill sets and the management sets of all the agents,  │
    │   and the agent work plan specifically includes a shift  │
    │      schedule and a quantity of required management  │
    │                   sets in the shift                │
    └────────────────────────────────────────────┘
```

FIG. 5

601

Put agents with the same skills into a skill set

602

Determine a quantity proportion of agents included in each skill set, where the quantity proportion of agents is referred to as an agent proportion in short

603

Divide all agents in the call center into management sets, so that in each management set, the quantity proportion of the agents of each skill set respectively equals the agent proportion

604

Obtain a traffic demand quantity according to historical traffic data, and transform the traffic demand quantity into demand quantity of agents with a certain skill within a certain future time period T, where the demand quantity of agents is measured with a time interval t being used as a unit

605

Obtain an agent work plan within the time period T according to the demand quantity of agents, and the skill sets and the management sets of all the agents, and the agent work plan specifically includes a shift schedule and a quantity of required management sets in the shift

FIG. 6

701

Obtain skill sets and management sets of agents according to information of the agents in a call center

702

Obtain a traffic demand quantity according to historical traffic data, and transform the traffic demand quantity into demand quantity of agents with a certain skill within a certain future time period T, where the demand quantity of agents is measured with a time interval t being used as a unit

703

Obtain a sum of the demand quantities of agents of all skill sets within the time period T with the time interval t as the unit, where the sum of the demand quantities of agents is referred to as a total demand quantity in short

704

Determine a quantity proportion of agents included in each skill set, where the quantity proportion of agents is referred to as an agent proportion in short

705

Obtain a demand quantity of agents of each skill set respectively within the time interval t according to the total demand quantity and the agent proportion

706

Obtain respectively an agent work plan of each skill set within the time period T according to the demand quantity of agents of each skill set respectively within the time interval t, the skill sets, and the management sets, and the agent work plan specifically includes a shift schedule and a quantity of required management sets in the shift

FIG. 7

# INTERNATIONAL SEARCH REPORT

| International application No. |
|---|
| PCT/CN2009/074424 |

**A. CLASSIFICATION OF SUBJECT MATTER**

H04W 28/00 (2009.01) i

According to International Patent Classification (IPC) or to both national classification and IPC

**B. FIELDS SEARCHED**

Minimum documentation searched (classification system followed by classification symbols)

IPC: H04Q, H04W, H04L, H04M

Documentation searched other than minimum documentation to the extent that such documents are included in the fields searched

Electronic data base consulted during the international search (name of data base and, where practicable, search terms used)

CPRS, CNKI, WPI, EPODOC, IEEE: shift?, agent?, CSR, customer w service w representative, shedul+, manag+, +skill+, rout+, call w center, call w centre, resource

**C. DOCUMENTS CONSIDERED TO BE RELEVANT**

| Category* | Citation of document, with indication, where appropriate, of the relevant passages | Relevant to claim No. |
|---|---|---|
| X | YU, Kefeng. Reasonable Human Resource Scheduling, and Serving the Customers. Everyday Computer Newspaper. 13 Oct. 2008 (13.10.2008), pages 24-25. | 1,6 |
| A | | 2-5,7-10 |
| A | CN101207659A（HUAWEI TECHNOLOGIES CO LTD） 25 June 2008（25.06.2008）The whole document | 1-10 |
| A | CN1268851A（ROCKWELL ELECTRONIC COMMERCE COR） 04 Oct. 2000（04.10.2000）The whole document | 1-10 |
| A | US7325190B1（BOEHMER, Tiffany D. et al.）29 Jan. 2008（29.01.2008） The whole document | 1-10 |

☐ Further documents are listed in the continuation of Box C.　　　☒ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim (S) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 11 Jan. 2010（11.01.2010） | **21 Jan. 2010 (21.01.2010)** |

| Name and mailing address of the ISA/CN | Authorized officer |
|---|---|
| The State Intellectual Property Office, the P.R.China 6 Xitucheng Rd., Jimen Bridge, Haidian District, Beijing, China 100088 Facsimile No. 86-10-62019451 | LV,Sihua Telephone No. (86-10)62411386 |

Form PCT/ISA /210 (second sheet) (July 2009)

## INTERNATIONAL SEARCH REPORT
### Information on patent family members

| | International application No. |
|---|---|
| | PCT/CN2009/074424 |

| Patent Documents referred in the Report | Publication Date | Patent Family | Publication Date |
|---|---|---|---|
| CN101207659A | 25.06.2008 | None | |
| CN1268851A | 04.10.2000 | EP1039732A2 | 27.09.2000 |
| | | AU2243600A | 28.09.2000 |
| | | BR0001395A | 17.10.2000 |
| | | CA2302012A1 | 22.09.2000 |
| | | JP2000307735A | 02.11.2000 |
| | | NZ503448A | 30.11.2001 |
| | | US6424709B1 | 23.07.2002 |
| | | AU755956B | 02.01.2003 |
| | | EP1039732B1 | 14.06.2006 |
| | | DE60028635E | 27.07.2006 |
| | | CN1278567C | 04.10.2006 |
| | | DE60028635T2 | 14.06.2007 |
| US7325190B1 | 29.01.2008 | None | |

Form PCT/ISA /210 (patent family annex) (July 2009)

**EP 2 348 767 A1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 200810216775